# EUROPEAN PATENT APPLICATION

(11) **EP 4 310 212 A1**
(43) Date of publication of application: **24.01.2024**
(21) Application number: 22771520.8
(22) Date of filing: 17.03.2022
(51) Int. Cl.: C22C 19/07, C22F 1/00, C22F 1/10

(54) **THERMAL EXPANSION-CONTROLLED ALLOY**

(30) Priority: 19.03.2021 JP 2021046088
(71) Applicant: Shinhokoku Material Corp., Saitama 350-1124 (JP)
(72) Inventor: FUJII, Hiromichi, Kawagoe-shi, Saitama 350-1124 (JP); MATSUMURA, Shingo, Kawagoe-shi, Saitama 350-1124 (JP); OHNO, Haruyasu, Kawagoe-shi, Saitama 350-1124 (JP); ONA, Kotaro, Kawagoe-shi, Saitama 350-1124 (JP)
(74) Representative: Vossius & Partner Patentanwälte Rechtsanwälte mbB
(86) International application number: PCT/JP2022/012418
(87) International publication number: WO 2022/196775

(57) **Abstract**

The present invention has as its technical problem to obtain an alloy having a low thermal coefficient characteristic or a negative coefficient of thermal expansion in the vicinity of 600 to 800°C. The controlled expansion alloy of the present invention contains, by wt%, Fe: 20 to 50%, Ni: 0 to 25%, and Cr: 0 to 30% and has a balance of Co and impurities.

## Description

### FIELD

The present invention relate to a controlled expansion alloy, more particularly relates to an alloy having a low thermal expansion characteristic or a negative thermal expansion characteristic in the vicinity of 600 to 800°C, for example, an alloy suitable for an interconnector of a solid state oxide electrolyte fuel cell, a part of a gas-steam turbine, a part of an internal combustion engine, a die material for press-forming, and a heat sink material used in a high temperature environment.

### BACKGROUND

A solid state oxide electrolyte fuel cell uses stabilized zirconia or other ceramic as an electrolyte. In recent year, applications operating at a medium-high temperature of 700 to 800°C have also been developed. Interconnectors of a solid state oxide electrolyte fuel cell are conductive plates electrically serially connected to form cell stacks and are interconnector plates separating fuel gas and oxidizing gas. They have the role of supporting the three layers of the electrolyte, fuel electrodes, and air electrodes, forming gas channels, and carrying current.

Therefore, interconnectors are required to be excellent in electric conductivity at a medium and high temperature, have oxidation resistance, a small thermal expansion difference with the electrolyte, low cost, and easy workability and other characteristics. Various alloys are being developed suitable for interconnectors.

PTL 1 discloses a high temperature use high strength low thermal expansion cast alloy enabling production of complicatedly shaped parts or large-sized parts used for precision apparatuses without requiring special facilities or materials and having a high strength and low thermal expansion at a temperature up to 600°C, containing, by wt%, C: 0.02 to 0.06%, Si: 0.2 to 0.6%, Mn: 0.3 to 1.5%, Ni: 24.0 to 29.5%, and Co: 17.5 to 25.5%, having an Ni equivalent of 40.5 to 44.5% in range, having a value of A expressed by A=30[C]-1.5×[Si]+0.5×([Mn]-55×[S]/32)+[Ni]+0.05×[Co]+0.1 of 27.5 to 29.5 in range, having a balance of Fe and unavoidable impurities, and having an area ratio of the martensite phase in the microstructure of 30 to 90%.

PTL 2 discloses an alloy having a high strength and a low coefficient of thermal expansion designed for use in gas turbine engines and containing 7 to 9 wt% of chromium, 21 to 24 wt% of molybdenum, more than 5 wt% of tungsten, and a maximum 3 wt% of iron and having a balance of nickel and impurities, wherein an R value defined by R=2.66Al+0.19Co+0.84Cr- .16Cu+0.39Fe+0.60Mn+Mo+0.69Nb+2.16Si+ 0.47Ta+1.36Ti+1.07V+0.40W satisfies 31.95<R<33.45.

PTL 3 discloses a γ' precipitation hardening type low thermal expansion Ni-based superalloy having a coefficient of thermal expansion of the same extent as a ferrite-based 12Cr steel, further, having excellent high temperature strength, corrosion resistance, and oxidation resistance plus excellent hot workability, and excellent in weldability, comprising C: ≤0.15%, Si: ≤1%, Mn: ≤1%, Cr: 5 to less than 20%, Mo+1/2(W+Re): 5 to less than 17%, W: ≤10%, Al: 0.1 to 2.5%, Ti: 0.10 to 0.95%, Nb+1/2Ta: ≤1.5%, B: 0.001 to 0.02%, Zr: 0.001 to 0.2%, Fe: ≤4.0%, Al+Ti+Nb+Ta: 2.0 to 6.5% (atomic%), and a balance of unavoidable impurities and Ni.

PTL 4 discloses steel for an inexpensive solid state oxide type fuel cell separator forming an oxide film having excellent electric conductivity at 700 to 950°C or so, having excellent oxidation resistance even in long term use, in particular peeling resistance, excellent in impact characteristics at ordinary temperature, and small in thermal expansion difference with the electrolyte, which steel for a solid state oxide type fuel cell separator containing, by wt%, C: 0.2% or less, Si: 1.0% or less, Mn: 1.0% or less, Ni: 2% or less, Cr: 15 to 30%, Al: 1% or less, and one or more elements selected from the group comprising (Y: 0.5% or less, REM: 0.2% or less, Zr: 1% or less) and has a balance of substantially Fe, containing, as unavoidable impurities, S: 0.015% or less, O: 0.010% or less, N: 0.050% or less, and B: 0.0030% or less, and satisfying formula (1), a hardness being 280 HV or less, and an average ferrite crystal particle size being fine particles of ASTM2 or more.

### [CITATIONS LIST]

### [PATENT LITERATURE]

[PTL 1] WO2017/006659
[PTL 2] Japanese Unexamined Patent Publication No. 2014-501845
[PTL 3] Japanese Unexamined Patent Publication No. 2011-231410
[PTL 4] Japanese Unexamined Patent Publication No. 2003-173795

### SUMMARY

### [TECHNICAL PROBLEM]

In conventional high temperature environment use low thermal expansion alloys, it is possible to obtain a low thermal coefficient characteristic at 600 to 800°C of 10.0 to 16.0×10⁻⁶/°C or so, but an alloy with a smaller coefficient of thermal and an alloy with a negative coefficient of thermal expansion at a high temperature environment could not be obtained.

Therefore, the present invention has as its technical problem to obtain an alloy having a low thermal coefficient characteristic (small absolute value of coefficient of thermal expansion) or having a negative coefficient of thermal expansion (negative value of coefficient of thermal expansion) in the vicinity of 600 to 800°C.

### [SOLUTION TO PROBLEM]

The present inventors studied in depth an alloy having a low temperature expansion characteristic at a high temperature. As a result, they discovered that by controlling the chemical composition of a Fe-Co-Ni-based alloy, an alloy having a low thermal expansion characteristic or a negative thermal expansion characteristic at a high temperature is obtained.

The present invention was made by further proceeding with the studies and has as its gist the following:
(1) A controlled expansion alloy comprising, by wt%, Fe: 20 to 50%, Ni: 0 to 25%, Cr: 0 to 30% and a balance of Co and impurities.
(2) The controlled expansion alloy of the above (1) comprising Ni: 3 to 25%.
(3) The controlled expansion alloy of the above (1) or (2) comprising Cr: 5 to 30%.
(4) A controlled expansion alloy satisfying the composition according to any of the above (1) to (3) and including 5% or more of regions with crystal structures of an ordered phase.
(5) An interconnector for a solid state oxide electrolyte fuel cell comprised of a controlled expansion alloy of any of the above (1) to (4).
(6) A part for a gas turbine or for a steam turbine comprised of a controlled expansion alloy of any of the above (1) to (4).
(7) A die for shaping glass comprised of a controlled expansion alloy of any of the above (1) to (4).
(8) A heat sink comprised of a controlled expansion alloy of any of the above (1) to (4).

### [ADVANTAGEOUS EFFECTS OF INVENTION]

According to the present invention, it is possible to obtain an alloy having a low thermal coefficient characteristic or a negative coefficient of thermal expansion in the vicinity of 600 to 800°C.

### BRIEF DESCRIPTION OF DRAWINGS

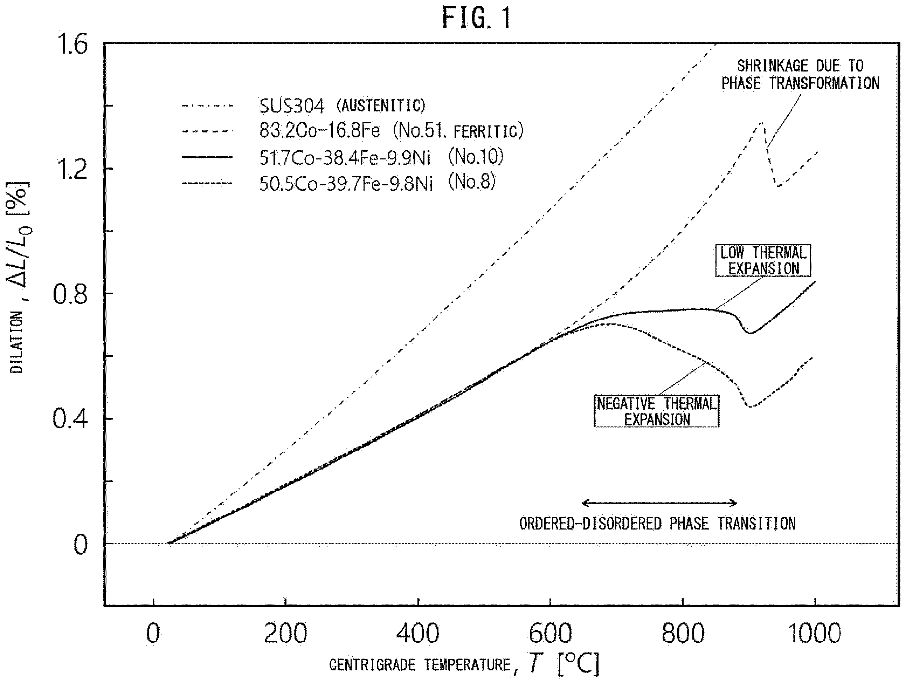

FIG. 1 is a view showing examples of thermal expansion curves of alloys produced in an embodiment.

### DESCRIPTION OF EMBODIMENTS

Below, the present invention will be explained in detail.

To start, the chemical composition of the controlled expansion alloy of the present invention will be explained.

The controlled expansion alloy of the present invention is an alloy comprised a Co base containing Fe and Ni and further containing Cr according to need.

In an alloy containing Co and Fe, if the composition ratio of the Co and Fe becomes 4:1 to 1:10 in range, at room temperature, part of the crystals become structures called an "ordered phase". If the temperature becomes 550 to 650°C or more, an ordered phase becomes a structure called a "disordered phase" and causes shrinkage of volume. This shrinkage of volume cancels out the natural thermal expansion, so it is possible to obtain a low thermal expansion characteristic or negative thermal expansion characteristic at a high temperature. Further, in the above range of composition, the alloy becomes a body-centric cubic crystal structure, so becomes lower in thermal expansion than an alloy having a face-centric crystal structure even at a temperature of 550 to 650°C or less.

The controlled expansion alloy of the present invention contains Fe in 20 to 50 wt%. The content of Fe is preferably 20.0 wt% or more, more preferably 25.0% wt or more, still more preferably 28.0 wt% or more. Further, preferably it is 50.0 wt% or less, more preferably 46.0 wt% or less, still more preferably 42.0 wt% or less.

The controlled expansion alloy of the present invention contains Ni in 0 to 25 wt%. Ni has the effect of lowering the temperature where an ordered phase starts to transform into a disordered phase. Ni is not essential. The content may be 0, but by adjusting the content, it becomes possible to control the temperature range at which a low thermal expansion characteristic or a negative thermal expansion characteristic occurs at a high temperature environment. Further, Ni has the effect of increasing the abundance ratio of the ordered phase, so by including a suitable amount, it becomes possible to control the low thermal expansion characteristic or negative thermal expansion characteristic at a high temperature environment.

The content of Ni is preferably 3.0 wt% or more, more preferably 4.0 wt% or more, still more preferably 6.0 wt% or more. Further, it is preferably 25.0 wt% or less, more preferably 22.0 wt% or less, still more preferably 20.0 wt% or less.

In addition to the above elements, impurities may be contained in a range not having an impact on the advantageous effects of the present invention. As the impurities, elements not intentionally added in the production process (unavoidable impurities) such as C, S, P, and Cu, Si, Al, and Mn added for the purpose of deoxidation, etc. may be mentioned.

The controlled expansion alloy of the present invention may also be made to contain Cr in place of part of the Fe. Cr has the effect of preventing high temperature oxidation and corrosion. Cr is not an element essential for obtaining an alloy having a low thermal expansion characteristic or negative thermal expansion characteristic in the vicinity of 600 to 800°C. The lower limit of the content in the present invention is 0. The effect of addition of Cr can be obtained even with addition in a small amount, but to effectively prevent high temperature oxidation and corrosion, inclusion in 5 wt% or more is preferable. 10 wt% or more is more preferable. Cr is also an element making the coefficient of thermal expansion increase, so the content is made 30 wt% or less.

The content of Cr is preferably 5.0 wt% or more, more preferably 10.0 wt% or more, still more preferably 15.0 wt% or more. Further, it is preferably 30.0 wt% or less, more preferably 25.0 wt% or less, still more preferably 20.0 wt% or less.

The structure of the controlled expansion alloy of the present invention preferably includes 5% or more of regions with a crystal structure of the above-mentioned ordered phase. "5% or more of ... with a crystal structure" can be confirmed by measuring the X-ray diffraction spectrum of the controlled expansion alloy to find the lattice constant. The lattice constant of the controlled expansion alloy of the present invention changes depending on the chemical composition. If the composition is fixed, the abundance ratios of the ordered phase and disordered phase are found by proportional distribution of the lattice constants of the respective phases by the abundance ratios. Specifically, if the lattice constants of the ordered phase and disordered phase are A_{O} Å, A_{D} Å, it is judged that 5% or more of regions become the ordered phase if the lattice constant is 0.05A_{O} +0.95A_{D} Å or more. The ratio of the regions becoming the ordered phase is preferably 10% or more, more preferably 15% or more, still more preferably 20% or more.

Next, method of production of the controlled expansion alloy of the present invention will be explained.

The controlled expansion alloy of the present invention can be obtained by casting. The casting mold used for the casting and the apparatus for pouring the molten steel into the casting mold and the pouring method are not particularly limited. A known apparatus and method may be used.

The as-cast alloy having the above-mentioned chemical composition has a low coefficient of thermal expansion at a high temperature, that is, a small absolute value of the coefficient of thermal expansion or negative value.

For the purpose of formation into an as-cast alloy, the alloy may be hot forged at a temperature of 1050 to 1250°C. The forging ratio at that time is preferably 3 or more. Even if performing hot forging, the low thermal expansion characteristic or negative thermal expansion characteristic is maintained. Further, by hot rolling and cold rolling, the alloy can be worked to a thickness of 0.1 to 10 mm. In that case as well, the low thermal expansion characteristic or negative thermal expansion characteristic is maintained.

Even as cast, forged, or rolled, an alloy containing 5% or more of an ordered phase can be obtained, but to stably contain 5% or more of the ordered phase, it is preferable to heat the above-mentioned cast steel, forged steel, or rolled steel to a temperature of 900 to 1100°C, hold it there for 0.5 to 5 hours, then cool it in the furnace. The slower the cooling speed, the more the amount of the ordered phase increases, so preferably it is made 10 to 100°C/hr. If the cooling speed is fast, sometimes 5% or more of the ordered phase may be not included.

Further, even with a rapidly cooled alloy, an ordered phase is formed if heating it to a temperature of 300 to 700°C and holding it there for a certain time period. It is also possible to form an ordered phase by heat treating an alloy at a temperature of 800 to 1100°C, then using a salt bath to heat and hold the alloy at a temperature of 300 to 700°C for a certain time period.

More specifically, the controlled expansion alloy of the present invention has an average coefficient of thermal expansion at 600 to 800°C of 9.0×10^{- 6}/°C or less, preferably 8.0×10⁻⁶/°C or less, more preferably 7.5×10⁻⁶/°C or less.

### EXAMPLES

### (Example 1)

Melts prepared so as to have the chemical composition described in Table 1 were poured into casting molds to prepare alloys. In Nos. 21 to 27 of Table 1, the cast alloys were hot forged at 1100°C, then were heated at 1100°C for 2 hours, then were furnace cooled at 100°C/hr. From the prepared alloys, thermal expansion test pieces (ϕ5×20L) were taken. A thermal expansion measuring device made by NETZSCH was used to measure the coefficients of thermal expansion from room temperature to 1000°C at a rate of temperature rise of 5°C/min by the differential expansion method using quartz as a standard sample. The average coefficients of thermal expansion from 600°C to 800°C were calculated. The obtained results are shown in Table 1.

### [Table 1]

**Table 1**

| No. | Co | Fe | Ni | Cr | Others | Average coefficient of thermal expansion at 600 to 800°C (×10⁻⁶/°C) | |
|---|---|---|---|---|---|---|---|
| 1 | 64.7 | 32.4 | 2.9 | - | | 7.8 | Inv. ex. |
| 2 | 67.3 | 29.6 | 3.1 | - | | 7.7 | |
| 3 | 59.3 | 35.9 | 4.8 | - | | 7.7 | |
| 4 | 62.4 | 32.7 | 4.9 | - | | 7.1 | |
| 5 | 65.4 | 29.5 | 5.0 | - | | 7.9 | |
| 6 | 65.9 | 29.2 | 4.9 | - | | 7.9 | |
| 7 | 67.7 | 27.4 | 4.9 | - | | 7.3 | |
| 8 | 50.5 | 39.7 | 9.8 | - | | -1.4 | |
| 9 | 50.8 | 39.7 | 9.5 | - | | 7.8 | |
| 10 | 51.7 | 38.4 | 9.9 | - | | 5.0 | |
| 11 | 53.2 | 37.0 | 9.8 | - | | 1.8 | |
| 12 | 57.0 | 33.2 | 9.8 | - | | 7.6 | |
| 13 | 39.7 | 45.2 | 15.1 | - | | -0.9 | |
| 14 | 43.5 | 42.2 | 14.3 | - | | 6.4 | |
| 15 | 45.3 | 40.1 | 14.6 | - | | 4.1 | |
| 16 | 49.2 | 36.3 | 14.5 | - | | 4.4 | |
| 17 | 31.3 | 49.2 | 19.5 | - | | -2.6 | |
| 18 | 34.3 | 46.5 | 19.2 | - | | 3.1 | |
| 19 | 38.7 | 41.9 | 19.4 | - | | 2.0 | |
| 20 | 41.3 | 39.0 | 19.7 | - | | 7.1 | |
| 21 | 47.7 | 37.5 | 9.8 | 5.0 | | 8.5 | |
| 22 | 45.1 | 35.5 | 9.3 | 10.1 | | 8.7 | |
| 23 | 54.9 | 24.8 | 4.4 | 15.9 | | 8.8 | |
| 24 | 42.6 | 33.2 | 8.7 | 15.5 | | 8.8 | |
| 25 | 34.0 | 37.6 | 12.6 | 15.8 | | 8.6 | |
| 26 | 39.9 | 31.3 | 8.2 | 20.6 | | 8.7 | |
| 27 | 37.6 | 29.0 | 7.7 | 25.7 | | 8.9 | |
| 51 | 83.2 | 16.8 | - | - | | 17.4 | Comp. ex. |
| 52 | 19 | Bal. | 28 | 0.05 | C: 0.04, Si: 0.43, Mn: 0.35 | 17.5 | |
| 53 | - | - | Bal. | 7 | Mo: 21, W: 16 | 16.3 | |
| 54 | 3.2 | 0.2 | Bal. | 16 | C: 0.02, Si: 0.05, Mn: 0.05,Mo: 14, W: 2, Nb: 0.3, Al: 1.4, Ti: 0.9, Zr: 0.01, B: 0.003 | 16.6 | |
| 55 | - | - | 0.4 | 22 | C: 0.02, Si: 0.43, Mn: 0.48, Zr: 0.16 | 17.6 | |

According to the present invention, it is possible to obtain an alloy having a low thermal expansion characteristic or negative thermal expansion characteristic in the vicinity of 600 to 800°C.

FIG. 1 shows examples of thermal expansion curves at room temperature to 1000°C of alloys produced in the examples. In the alloys of the invention examples, it could be confirmed that the thermal expansion was lower than the austenitic alloys in all temperature ranges and a low thermal expansion region and negative thermal expansion region appeared at a temperature of 600 to 800°C. In the ferrite-based alloys of the comparative examples, up until 600°C, similar thermal expansion curves as the alloys of the examples were obtained, but no low thermal expansion characteristic or negative thermal expansion characteristic appeared.

Note that in the Nos. 1 to 27 alloys, it was confirmed that the structures contain 5% or more of regions where the crystal structure became an ordered phase.

### (Example 2)

Melts prepared so as to have the chemical composition described in Table 2 were poured into casting molds to prepare alloys. From the prepared alloys, test pieces for evaluation of the oxidation resistance (ϕ8×25L) were taken. The obtained test pieces were heat treated at a temperature of 800°C. The increases in weight due to formation of oxides were measured every 24 hours. The obtained results are shown in Table 2. As shown in Table 2, the controlled expansion alloy of the present invention could be confirmed to be able to improve the oxidation resistance at a high temperature (800°C) by being made to include Cr.

### [Table 2]

**Table 2**

| No. | Co | Fe | Ni | Cr | Amount of increase of oxides after different heat treatment times (g) | | | | |
|---|---|---|---|---|---|---|---|---|---|
| | | | | | 24 hr | 48 hr | 72 hr | 96 hr | |
| 28 | 50.3 | 39.3 | 10.0 | - | 0.0468 | 0.062 | 0.0767 | 0.0904 | Inv. ex. |
| 29 | 47.0 | 37.5 | 9.8 | 5.0 | 0.0295 | 0.0454 | 0.0582 | 0.0669 | |
| 30 | 44.4 | 35.5 | 9.3 | 10.2 | 0.0297 | 0.0448 | 0.0575 | 0.0645 | |
| 31 | 41.9 | 33.2 | 8.7 | 15.5 | 0.0012 | 0.0031 | 0.0062 | 0.0076 | |
| 32 | 39.2 | 31.3 | 8.2 | 20.6 | 0.001 | 0.0017 | 0.0019 | 0.0015 | |
| 33 | 36.9 | 29.0 | 7.7 | 25.7 | 0.0002 | 0.0007 | 0.0015 | 0.0008 | |
| 56 | - | 83.0 | - | 17.0 | 0 | 0.0005 | 0.001 | 0.0005 | Comp. ex. |

## Claims

1. A controlled expansion alloy comprising, by wt%,
Fe: 20 to 50%,
Ni: 0 to 25%,
Cr: 0 to 30% and
a balance of Co and impurities.

2. The controlled expansion alloy of claim 1 comprising Ni: 3 to 25%.

3. The controlled expansion alloy of claim 1 or 2 comprising Cr: 5 to 30%.

4. A controlled expansion alloy satisfying the composition according to any of claims 1 to 3 and including 5% or more of regions with a crystal structure of an ordered phase.

5. An interconnector for a solid state oxide electrolyte fuel cell comprised of a controlled expansion alloy of any of claims 1 to 4.

6. A part for a gas turbine or for a steam turbine comprised of a controlled expansion alloy of any of claims 1 to 4.

7. A die for shaping glass comprised of a controlled expansion alloy of any of claims 1 to 4.

8. A heat sink comprised of a controlled expansion alloy of any of claims 1 to 4.
